# EUROPEAN PATENT SPECIFICATION

(11) **EP 0 590 680 B1**
(45) Date of publication and mention of the grant of the patent: **20.03.1996**
(21) Application number: 93115886.9
(22) Date of filing: 01.10.1993
(51) Int. Cl.: C23C 26/00, B32B 7/00

(54) **Method of manufacturing organic films**
Verfahren zur Herstellung organischer Filme
Procédé pour la fabrication de couches organiques

(30) Priority: 02.10.1992 JP 264499/92
(43) Date of publication of application: 06.04.1994
(73) Proprietor: MATSUSHITA ELECTRIC INDUSTRIAL CO., LTD., Kadoma-shi, Osaka 571 (JP)
(72) Inventor: Nishiyama, Kazuhiro, Katano-shi, Osaka 576 (JP); Mino, Norihisa, Settu-shi, Osaka 566 (JP); Ogawa, Kazufumi, Nara-shi, Nara 630 (JP)
(74) Representative: VOSSIUS & PARTNER

(56) References cited:
- EP-A- 0 466 044
- US-A- 4 761 316
- US-A- 4 992 316
- US-A- 5 079 600

## Description

The present invention relates to methods of manufacturing organic films in which a monomolecular organic film and a laminated organic film can be manufactured more simply using a wide range of organic compounds. More particularly, a metal compound having an electrophilic property is adsorbed to a substrate surface and then an organic compound having an active hydrogen atom is adsorbed to the substrate surface . As a result, a monomolecular organic film can be manufactured on the substrate surface. Further, a laminated organic film can be manufactured by selecting the organic compound to be used.

The present invention relates to a method of manufacturing a monomolecular organic film and a laminated organic film more simply using a wide range of organic compounds.

There are known techniques for manufacturing an organic film, including the Langmuir-Blodgett technique and a chemical adsorption method.

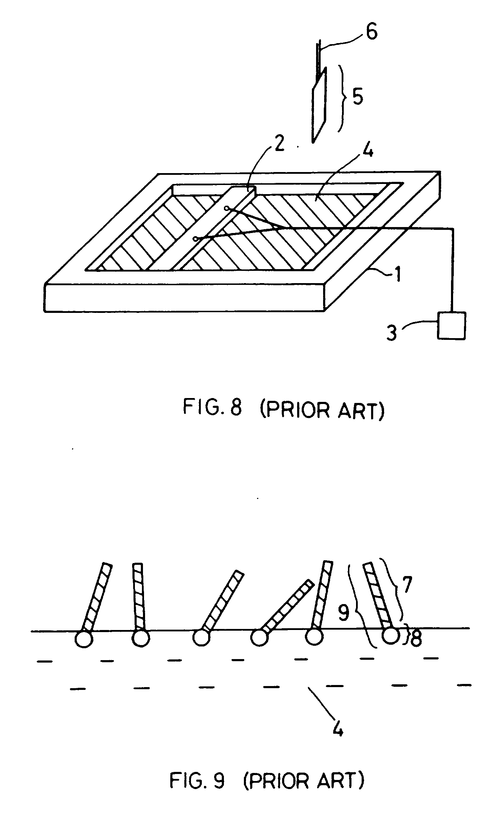

The Langmuir-Blodgett method comprises dissolving an amphipathic organic molecule in redistilled water 4 contained in a square-shaped water tank 1 of an apparatus for manufacturing a film using the Langmuir-Blogett method as shown in Figure 8 and dropping the solution above mentioned and manufacturing a gaseous film on the surface of the redistilled water 4. The gaseous film is pressed by using a barrier 2 having a weight sufficient to produce a condensed film on the surface of the redistilled water 4, and a cleaned substrate 5 is dipped in the condensed film and picked up by using an equipment 6 for moving the substrate up and down . As a result, a monomolecular film can be manufactured on a substrate surface 5. A laminated film can be manufactured by repeating the above mentioned process.

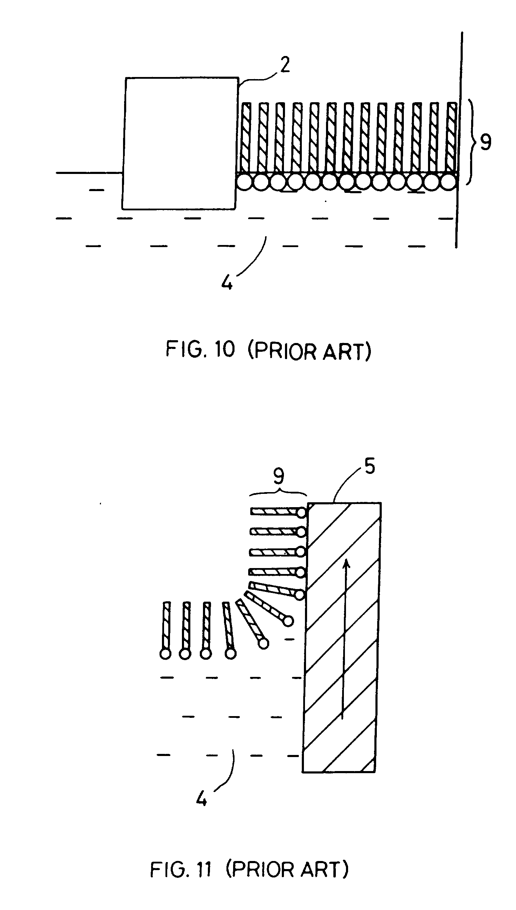

As shown in Fig. 9, an amphipathic molecule 9 has a hydrophobic portion 7 and a hydrophilic portion 8. A condensed film can be manufactured by pressuring the amphipathic molecules 9 using a barrier 2 as shown in Fig. 10.

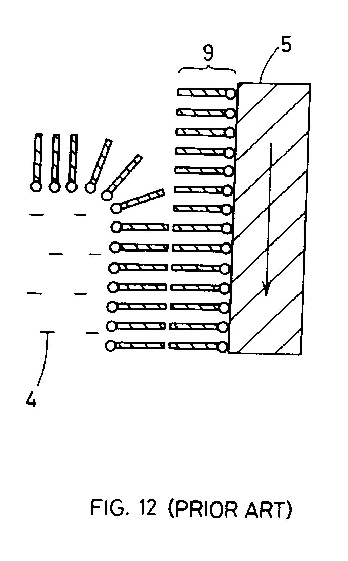

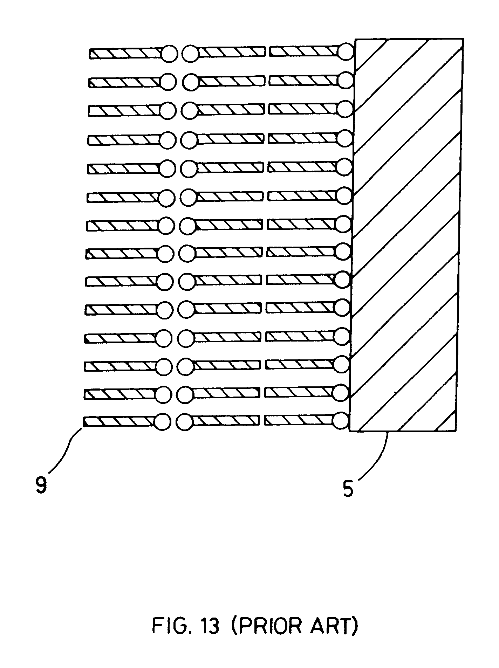

A laminated film containing amphipathic molecules 9 as shown in Fig. 13 can be manufactured by moving a substrate 5 up and down as shown in Fig. 11 and Fig. 12.

The chemical adsorption method of the prior art comprises dipping a substrate having -OH groups on its surface in a solution of an organic compound having a terminal chlorosilyl group, taking out the substrate from the solution to wash it with solvent, and treating it with water. As a result, a monomolecular film can be manufactured on a substrate surface. A laminating method known in the prior art comprises repeating the procedure above mentioned.

However, in the Langmuir-Blodgett technique of the prior art, there are some problems: only a substrate having a planar shape can be used, in manufacturing film, prevention of impurity contamination is needed, operation is complicated, and only an amphipathic molecule can be used as the adsorbed molecule.

Further, in the chemical adsorption method of the prior art, an organic compound having a terminal chlorosilyl group is used as adsorbent, but there are few such organic compounds having terminal chlorosilyl groups. So the kind of organic films which can be made are very limited.

It is hence a primary object of the invention to present a method of manufacturing an organic film simply using a wide range of organic compounds in order to solve the problems of the prior art.

To achieve the above object, the method of manufacturing an organic film of the invention is a method of manufacturing an organic film comprising the following procedure:
dipping and holding a substrate having active hydrogen atoms on its surface in a solution of an electrophilic metal compound,
washing the substrate with a non-aqueous solvent, thereby forming a monomolecular film of the electrophilic metal compound on the substrate surface, and
dipping and holding the substrate having the monomolecular film of the metal compound on it in an organic compound having at least one of an active hydrogen atom or an acid anhydride of the organic compound, or in a solution of the organic compound having an active hydrogen atom or a solution of the acid anhydride of the organic compound, thereby
forming a monomolecular organic film on the surface of the monomolecular film of the metal compound.

It is preferable in this invention that the organic compound is selected from at least one of carboxylic acids, organic phosphoric acid and sulfonic acids.

It is preferable in this invention that the solution of the electrophilic metal compound is a non-aqueous solution.

It is preferable in this invention that the substrate having active hydrogen atoms has at least one group selected from -OH group, >NH group, -NH₂ groups -COOH group and -SH group on its surface.

It is preferable in this invention that the electrophilic metal compound is selected from halides, hydroxides, alkyl compounds and alkoxy compounds.

It is preferable in this invention that the metal component of the electrophilic metal compound is selected from at least one of germanium (Ge), tin (Sn), titanium (Ti), zirconium (Zr), hafnium (Hf) and samarium (Sm).

Another object of the invention is to provide a method of manufacturing an organic film comprising dipping and holding a substrate having active hydrogen atom on its surface in a solution of an electrophilic metal compound, washing the substrate with a non-aqueous solvent, thereby forming a monomolecular film of the electrophilic metal compound on said substrate surface; and dipping and holding the substrate having the monomolecular film of the metal compound on it in an organic compound having at least one of an active hydrogen atom, or which is an acid anhydride of the organic compound, a solution of the organic compound having an active hydrogen atom or a solution of the acid anhydride of the organic compound, and
forming a monomolecular organic film on said surface of the monomolecular film of said electrophilic metal compound, and repeating these steps at least two times.

It is preferable in this invention that the organic compound is selected from dicarboxylic acids, organic hypophosphoric acids and disulfonic acids.

It is preferable in this invention that the electrophilic metal compound is dissolved in a nonaqueous solvent.

It is preferable in this invention that the substrate having active hydrogen atoms has at least one group selected from -OH group, >NH group, -NH₂ group -COOH group and -SH group on its surface.

It is preferable in this invention that the electrophilic metal compound is selected from halides, hydroxides, alkyl compounds and alkoxy compounds of at least one of germanium (Ge), tin (Sn), titanium (Ti), zirconium (Zr), hafnium (Hf), samarium (Sm).

The method of manufacturing an organic film of the invention comprises liquefying (dissolving or melting) a molecule to be adsorbed,dipping a substrate in the above mentioned solution chemically reacting the substrate surface and the molecule to be absorbed,thereby manufacturing a monomolecular film. As a result, the operation of the method above mentioned is very simple and contamination by impurities such as dust can be avoided. Further, the shape of the substrate is not limited since the organic film can be manufactured simply by contacting the molecule to be adsorbed and a substrate surface having active hydrogen atoms. Further, in the chemical adsorption method of the prior art, an organic film can be manufactured by reacting an active hydrogen atom of the substrate and a halosilyl group of the adsorbent. However, in this invention, a metal compound having an electrophilic property is adsorbed to a substrate surface and then an organic compound is adsorbed thereto. As a result, an organic compound having an active hydrogen atom or an acid anhydride of theorganic compound can be adsorbed in addition to a halosilane.

Fig. 1 is a conceptual figure showing a monomolecular film of a metal compound manufactured on a substrate surface of one example of the invention.

Fig. 2 is a conceptual figure showing a monomolecular organic film manufactured on a substrate surface carrying a monomolecular film of a metal compound of one example of the invention.

Fig. 3 is a conceptual figure showing a monomolecular organic film manufactured on a substrate surface carrying a monomolecular film of a metal compound of another example of the invention.

Fig. 4 is a conceptual figure showing a monomolecular metal film manufactured on a surface of a monomolecular organic film in a laminated organic film of another example of the invention.

Fig. 5 is a conceptual figure showing a laminated organic film of another example of the invention.

Fig. 6 is a conceptual figure showing a laminated organic film of another example of the invention.

Fig. 7 is an infrared absorption spectrum of a monomolecular organic film of one example of the invention.

Fig. 8 is a plan view showing a conventional apparatus for manufacturing a Langmuir-Blodgett technique film.

Fig. 9 is a cross section diagram showing a gaseous film formed in manufacturing a Langmuir-Blodgett film according to the conventional method.

Fig. 10 is a cross section diagram showing a condensed film formed in manufacturing a Langmuir-Blodgett film according to the conventional method.

Fig. 11 is a cross sectional view showing a process of manufacturing a film according to the conventional method of manufacturing a Langmuir-Blodgett film.

Fig. 12 is a cross sectional view showing a process of manufacturing a laminated film according to the conventional method of manufacturing a Langmuir-Blodgett film.

Fig. 13 is a cross sectional view showing a structure of a laminated film according to the conventional method of manufacturing a Langmuir-Blodgett film.

According to the invention, a substrate having active hydrogen atoms on its surface can be used to manufacture an organic film. The usable substrates include glass, alumina, silicon oxide, chromium oxide, stainless steel, mica, silicon, polyurethane, polyamide, ceramics, metals, metal oxides, fibers and resins having on the surfaces >NH groups, -NH₂ groups, -COOH groups, OH groups, -SH groups.

Metal compounds having an electrophilic property include halides, hydroxides, alkyl compounds and alkoxy compounds of germanium (Ge), tin (Sn), titanium (Ti), zirconium (Zr), hafnium (Hf) and samarium (Sm). A substrate is dipped and held in these compounds, or in a solution of these compounds, so that a metal atom is attracted by an oxygen atom on the substrate surface because the metal atom has a strong electrophilic property. As a result, a hydrogen dehalogenation reaction is taking place in case of a halogenated compound, a dehydration is taking place in case of a hydroxide, a dealkanation reaction is taking place in case of an alkyl compound and a dealcoholizing reaction is taking place in case of an alkoxy compound, thereby bonding the metal to the substrate surface.

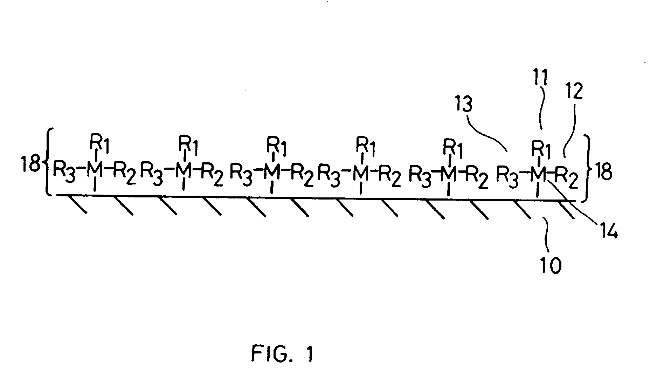

Then, the substrate is washed with a non-aqueous solvent to remove unreacted metal compound, thereby forming a monomolecular metal layer 18 on the substrate surface 10 as shown in Fig. 1. The monomolecular film of the metal element 14 is bonded to the substrate and has substituent groups 11, 12 and 13.

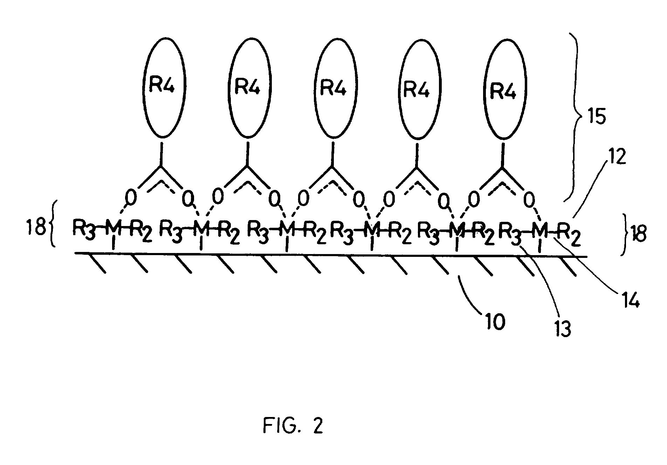

Further, a substrate on whose surface the monomolecular metal layer 18 is provided is dipped and held in an organic compound or compounds having an active hydrogen atom such as carboxylic acids, organic phosphoric acids, sulfonic acids, alcohols, aldehydes, thiols and amines, or acid anhydrides of organic compounds or solutions of these organic compounds. As a result, the oxygen atoms of these organic compounds and the metal atoms provided on the substrate surface interact intensely and these organic compounds are bonded to the metal element on the substrate surface; thereby a monomolecular organic film 15 is manufactured on the substrate surface as shown in Fig. 2. Carboxylic acids, organic phosphoric acids, sulfonic acids, carboxylic acid anhydrides, organic phosphoric acid anhydrides and sulfonic acid anhydrides are prefered, as they react highly and are stable after being adsorbed.

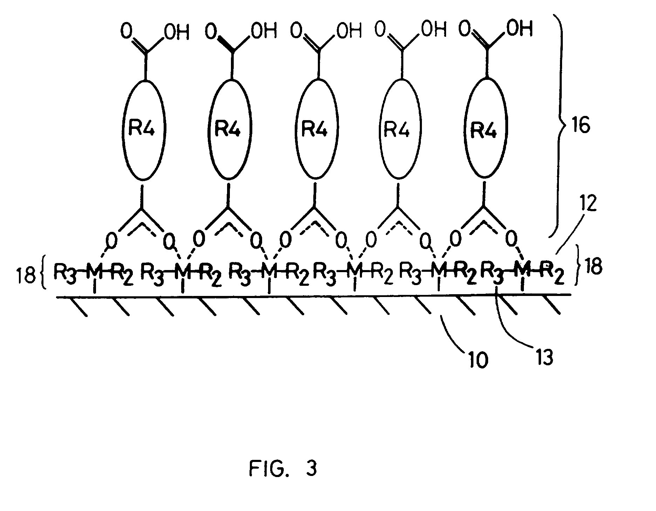

A monomolecular organic film 16 having active hydrogen atoms on its surface can be manufactured as shown in Fig. 3 by using bivalent organic compounds such as a bivalent acid, an alcohol, a thiol, an amine and an acid anhydride of an organic compound instead of using the monovalent organic compounds above mentioned.

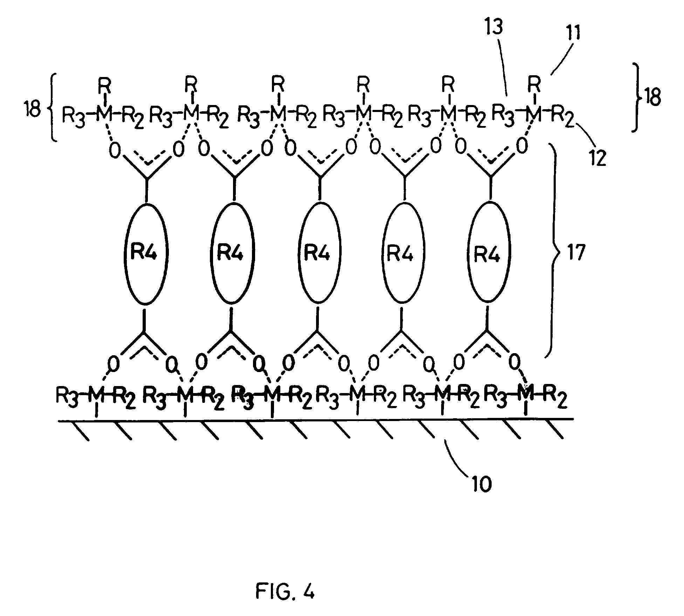

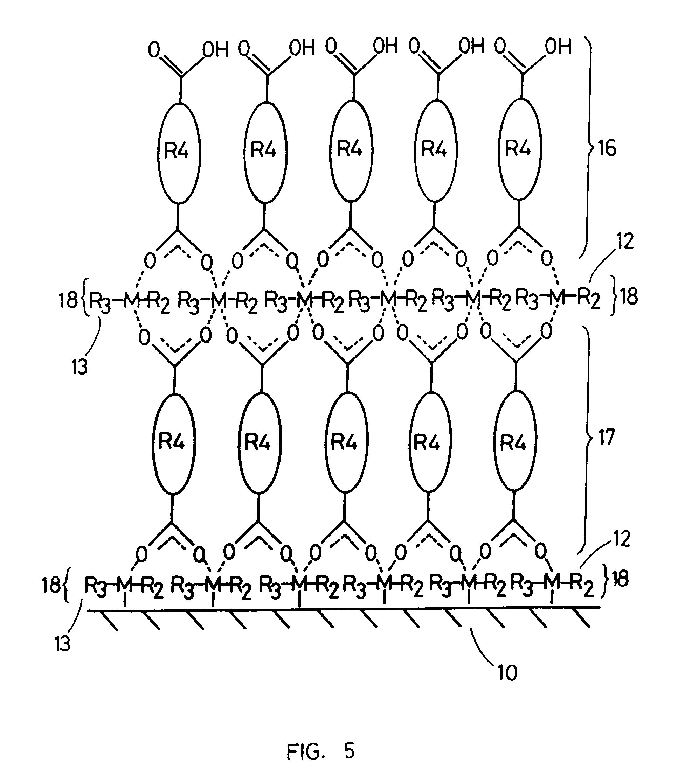

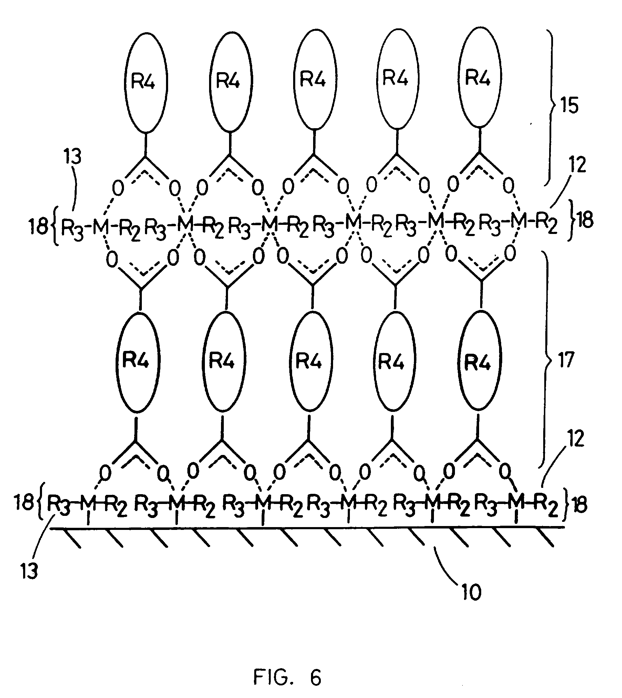

Further, a monomolecular film 18 can be manufactured on the surface of the monomolecular organic film 17 as shown in Fig. 4 by dipping and holding the substrate in a metal compound having an electrophilic property such as hydroxides, halides, alkyl compounds and alkoxy compounds of germanium (Ge), tin (Sn), titanium (Ti), circonium (Zr), hafnium (Hf) and samarium (Sm) or solutions of these compounds. An organic laminated film 16 or 15 having a metal atom between organic layers can be manufactured as shown in Fig. 5 or Fig. 6 by repeating the procedures above mentioned. In these Figs. a carboxylic acid is used as organic compound, however, organic phosphoric acids, sulfonic acids, alcohols, thiols, amines and acid anhydrides of organic compounds can be used.

The concentration of the solution used for applying a monomolecular metal film and a monomolecular organic film and the reactive temperatures and adsorption times will be described.

The concentration of the solution is not limited as long as the compound to be adsorbed can be dissolved in the solvent. However, high concentrations of the solution make it difficult to wash the substrate and low concentrations of the solution require a very long adsorption time. Therefore, concentrations of 1.0 mol/l to 1.0 x 10⁻⁵ mol/l are most preferable.

A reaction temperature of 0 - 60 °C is most preferable for adsorption.

The adsorption time required depends on the sort of adsorbent and the concentration of the solution. For example, a film which has a satisfactory density can not be manufactured at the lowest concentration in the range above mentioned within a one hour adsorption time. Although there is a long adsorption time, once a monomolecular film is manufactured on a substrate surface, further reaction is not carried out. Thereby, a 1 to 24 hour adsorption time is most preferable for adsorption.

### Example 1

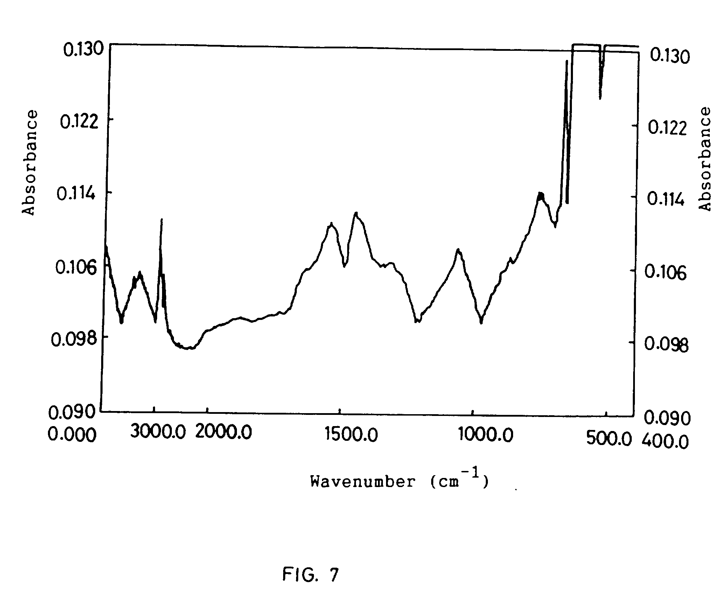

A glass substrate of 70.00 mm length, 29.2 mm width, and 1.0 mm thickness was dipped and held in a hexadecane solution of 1.0 vol. % of triisopropoxytitanyl chloride at 25 °C for two hours. Then the substrate was taken out from the solution and washed with hexane three times. Then the substrate was dipped and held in a hexadecane solution of 1.0 vol. % of palmitic acid (including 10 vol.% chloroform) at 50 °C for two hours. Then the substrate was taken out from the solution and washed with hexane three times. The substrate was dried in a dry nitrogen atmosphere for one day and measured using the multiple reflection-absorption method of infrared spectroscopic analysis. As shown in Fig. 7, at wave number 2927 cm⁻¹ an absorption of asymmetrical stretching vibration of methylene was observed and at wave number 2850 cm⁻¹ an absorption of symmetrical stretching vibration of methylene was observed. Further, at wave number 1458 cm⁻¹ and 1640 cm⁻¹, a peculiar absorption of carboxylate was observed. As a result, it was confirmed that a monomolecular film was manufactured.

According to the invention above mentioned, the triisopropoxyltitanyl chloride used as the metal compound was easily adsorbed to the substrate surface, as titanium atoms have an extremely strong oxygen affinity. Further, the adsorbed titanium atoms interacted with palmitic acid to produce a monomolecular film on the substrate surface.

### Example 2

A glass substrate of 70.00 mm length, 29.2 mm width, and 1.0 mm thickness was dipped and held in a hexadecane solution of 1.0 vol % of di-n-butyltin dichloride at 25 °C for two hours. Then the substrate was taken out from the solution and washed with hexane three times. Then, the substrate was dipped and held in a hexadecane solution (including 10 vol. % of chloroform) of 1.0 vol. % of palmitic acid at 50 °C for two hours. Then the substrate was taken out from the solution and washed with hexane three times. The substrate was dried in a dry nitrogen atmosphere for one day. As a result, an organic monomolecular film 15 as shown in formula in Fig. 2 was formed on the substrate 10 via the metal compound monomolecular film 18 composed of metal element 14 (tin) and substituent groups 12, 13 (n-butyl group or chloro atom).

According to the invention above mentioned, di-n-butyltin dichloride was used as the metal compound and was easily adsorbed to a substrate surface because tin atoms have an extremely strong oxygen affinity. Further, the adsorbed tin atoms interacted with palmitic acid to form a monomolecular film on the substrate surface.

### Example 3

A glass substrate of 70.00 mm length, 29.2 mm width, and 1.0 mm thickness was dipped and held in a hexadecane solution of 1.0 vol. % of triisopropoxytitanyl chloride at 25 °C for two hours. Then the substrate was taken out from the solution and washed with hexane three times. Then, the substrate was dipped and held in a hexadecane solution (including 10 vol. % of chloroform) of 1.0 vol. % of sebacic acid at 50 °C for two hours. Then the substrate was taken out from the solution and washed with hexane three times. The substrate was dried. Then the substrate was dipped and held in a hexadecane solution of 1.0 vol. % of triisopropoxytitanyl chloride at 25 °C for two hours. Then the substrate was taken out from the solution and washed with hexane three times. Then, the substrate was dipped and held in a hexadecane solution (including 10 vol. % of chloroform) of 1.0 vol. % of palmitic acid at 50 °C for two hours. Then the substrate was taken out from the solution and washed with hexane three times. According to the infrared spectroscopic analysis, it was confirmed that an organic lamianted film as shown in Fig. 6 was formed on a substrate surface. The organic laminated film was composed of a metal compound monomolecular film 18 having substituent groups 12, 13 (isopropoxy group) formed on the substrate surface 10, an organic compound monomolecular film 17 (sebacic acid) formed on the metal compound monomolecular film 18 and an organic compound monomolecular film 15 (palmitic acid) which was formed on the organic compound monomolecular film 17 via a second metal compound monomolecular film 18.

According to the invention above mentioned, an organic laminated film was formed on a substrate surface using triisopropoxytitanyl chloride as the metal compound and sebacic acid (bivalent carboxylic acid) and palmitic acid (monovalent carboxylic acid).

### Example 4

A glass substrate of 70.00 mm length, 29.2 mm width, and 1.0 mm thickness was dipped and held in a solution of 1.0 vol. % of triisopropoxytitanyl chloride at 25 °C for two hours. Then the substrate was taken out from the solution and washed with hexane three times. Then, the substrate was dipped and held in a hexadecane solution (including 10 vol. % of chloroform) of 1.0 vol. % of sebacic acid at 50 °C for two hours. Then the substrate was taken out from the solution and washed with hexane three times. The substrate was dried. Then the substrate was dipped and held in a hexane solution of 1.0 vol. % of triisopropoxytitanyl chloride at 25 °C for two hours. Then the substrate was taken out from the solution and washed with hexane three times. Then, the substrate was dipped and held in a hexadecane solution (including 10 vol. % of chloroform) of 1.0 vol. % of sebacic acid at 50 °C for two hours. Then the substrate was taken out from the solution and washed with hexane three times. According to the infrared spectroscopic analysis, it was confirmed that an organic laminated film as shown in Fig. 5 was formed on a substrate surface. The organic laminated film was composed of a metal compound monomolecular film 18 having substituent groups 12, 13 (isopropoxy group) formed on the substrate surface 10, an organic compound monomolecular film 17 (sebacic acid) formed on the metal compound monomoleuclar film 18 and an organic compound monomolecular film 16 (sebacic acid) which was formed on the organic compound monomolecular film 17 viaa second metal compound monomolecular film 18.

According to the invention above mentioned, an organic laminated film was formed on a substrate surface using triisopropoxytitanyl chloride as the metal compound and sebacic acid (bivalent carboxylic acid).

### Example 5

A polyamide substrate of 70.00 mm length, 29.2 mm width, and 1.0 mm thickness was dipped and held in a "Fluorinert Fx 3252" (manufactured by Sumitomo 3M Co.,) solution of 1.0 vol. % of di-n-butyltin dichloride at 25 °C for two hours. Then the substrate was taken out from the solution and washed with hexane three times. Then, the substrate was dipped and held in a "Fluorinert FX 3252" solution of 1.0 vol. % of palmitic acid at 50 °C for two hours. Then the substrate was taken out from the solution and washed with "Fluorinert FX 3252" three times. The substrate was dried in a dry nitrogen atmosphere for one day.

As a result, an organic monomolecular film 15 as shown in Fig. 2 was formed on the substrate surface 10 via a metal compound monomolecular film 18 composed of a metal element 14 (tin) and substituent groups 12, 13 (n-butyl group or chloro atom).

According to the invention above mentioned, a monomolecular film was formed on a polyamide substrate surface using di-n-butyltin dichloride as the metal compound since di-n-butyltin dichloride can be easily adsorbed to a substrate because of the extremely strong electrophilic property of tin atoms. The tin atom adsorbed to the substrate interacted with the palmitic acid. As a result, a monomolecular film was formed.

### Example 6

A glass substrate of 70.00 mm length, 29.2 mm width, and 1.0 mm thickness was dipped and held in a hexadecane solution of 1.0 vol. % of di-n-butyltin dichloride (10 vol. % chloroform solution) at 25 °C for two hours. Then the substrate was taken out from the solution and washed with hexane three times. Then, the substrate was dipped and held in a hexadecane solution of 1.0 vol. % of palmitic acid anhydride (including 10 vol. % chloroform) at 50 °C for two hours. Then the substrate was taken out from the solution and washed with hexane three times. The substrate was dried in a dry nitrogen atmosphere for one day.

As a result, an organic monomolecular film 15 as shown in Fig. 2 was formed on the substrate surface 10 X via a metal compound monomolecular film 18 composed of a metal element 14 (tin) and substituent groups 12, 13 (n-butyl group or chloro atom).

According to the invention above mentioned, a monomolecular film was formed on a substrate surface using di-n-butyltin dichloride as the metal compound, as di-n-butyltin dichloride can be easily adsorbed to a substrate using the extremely strong electrophilic property of tin atoms and the tin atom adsorbed to the substrate interacted with palmitic acid.

According to the invention, a method of manufacturing an organic film comprises dipping and holding a substrate having active hydrogen atoms on its surface in a metal compound having an electrophilic property or a solution of the metal compound and washing the substrate with a non-aqueous solvent, thereby manufacturing a monomolecular metal film on a substrate surface; and dipping and holding a substrate having a monomolecular metal film in an organic compound or an acid anhydride of the organic compound or in a solution of the organic compound, thereby manufacturing a monomolecular organic film on a monomolecular film of the metal compound. According to the method of manufacturing an organic film above mentioned, unlike the Langmuir-Blogett technique, a complicated operation is not required and contamination by impurity on the inside of the film can be avoided. As a result, a film can be easily manufactured on a substrate having a complicated structure. Further, unlike the chemical adsorption method of the prior art, the adsorbent is not limited to an organic compound having a chlorosilyl group at molecular end. Thereby, a wide range of organic compounds can be used and an adsorbent which is handled with care is not required to be used.

## Claims

1. A method of manufacturing an organic film comprising the steps of :
a) dipping and holding a substrate having active hydrogen atoms on its surface in a solution of an electrophilic metal compound, and washing said substrate with a non-aqueous solvent, thereby forming a monomolecular film of said electrophilic metal compound on said substrate surface, and
b) dipping and holding said substrate having said monomolecular film of said electrophilic metal compound thereon in at least one organic compound selected from organic compounds having at least one active hydrogen atom and acid anhydrides of said organic compounds, or in a solution of said organic compound having an active hydrogen atom or a solution of said acid anhydride of said organic compound, thereby forming a monomolecular organic film on said surface of the monomolecular film of said electrophilic metal compound.

2. A method of manufacturing an organic film according to claim 1, wherein steps a) and b) are carried out at least twice.

3. A method of manufacturing an organic film according to claim 1 or 2, wherein the organic compound is selected from carboxylic acids, organic phosphoric acids and sulfonic acids.

4. A method of manufacturing an organic film according to claim 1 to 3, wherein the solution of the electrophilic metal compound is a non-aqueous solution.

5. A method of manufacturing an organic film according to claim 1 to 4, wherein the substrate having active hydrogen atoms comprises at least one group selected from of -OH groups, >NH groups, -NH₂ groups -COOH groups and -SH groups on its surface.

6. A method of manufacturing an organic film according to claim 1 to 5, wherein the electrophilic metal compound is selected from halides, hydroxides, alkyl compounds and alkoxy compounds.

7. A method of manufacturing an organic film according to claim 6, wherein the metal of said electrophilic metal compound is at least one metal selected from germanium (Ge), tin (Sn), titanium (Ti), Zirconium (Zr), hafnium (Hf) and samarium (Sm).

## Patentansprüche

1. Verfahren zur Herstellung eines organischen Films, umfassend die Schritte:
a) Eintauchen und Halten eines Substrates mit aktiven Wasserstoffatomen auf seiner Oberfläche in einer Lösung einer elektrophilen Metallverbindung, Waschen des Substrates mit einem nichtwäßrigen Lösungsmittel, wobei auf der Substratoberfläche ein monomolekularer Film der elektrophilen Metallverbindung erzeugt wird und
b) Eintauchen und Halten des Substrates mit dem monomolekularen Film der elektrophilen Metallverbindung darauf in mindestens einer organischen Verbindung, ausgewählt aus der Gruppe organischer Verbindungen mit mindestens einem aktiven Wasserstoffatom und Säureanhydriden der organischen Verbindungen oder in einer Lösung der organischen Verbindung mit einem aktiven Wasserstoffatom oder einer Lösung des Säureanhydrids der organischen Verbindung, wobei ein monomolekularer organischer Film auf der Oberfläche des monomolekularen Films der elektrophilen Metallverbindung erzeugt wird.

2. Verfahren zur Herstellung eines organischen Films nach Anspruch 1, wobei die Schritte a) und b) mindestens zweimal durchgeführt werden.

3. Verfahren zur Herstellung eines organischen Films nach Anspruch 1 oder 2, wobei die organische Verbindung ausgewählt ist aus Carbonsäuren, Organophosphorsäuren und Sulfonsäuren.

4. Verfahren zur Herstellung eines organischen Films nach Anspruch 1 bis 3, wobei die Lösung der elektrophilen Metallverbindung eine nichtwäßrige Lösung ist.

5. Verfahren zur Herstellung eines organischen Films nach Anspruch 1 bis 4, wobei das Substrat mit aktiven Wasserstoffatomen auf seiner Oberfläche mindestens eine aus -OH-Gruppen, >NH-Gruppen, -NH₂-Gruppen, -COOH-Gruppen und -SH-Gruppen ausgewählte Gruppe umfaßt.

6. Verfahren zur Herstellung eines organischen Films nach Anspruch 1 bis 5, wobei die elektrophile Metallverbindung ausgewählt ist aus Halogeniden, Hydroxiden, Alkylverbindungen und Alkoxyverbindungen.

7. Verfahren zur Herstellung eines organischen Films nach Anspruch 6, wobei das Metall der elektrophilen Metallverbindung mindestens ein aus Germanium (Ge), Zinn (Sn), Titan (Ti), Zirkonium (Zr), Hafnium (Hf) und Samarium (Sm) ausgewähltes Metall ist.

## Revendications

1. Procédé de préparation d'un film organique comprenant les étapes de :
a) tremper et maintenir un substrat ayant des atomes d'hydrogène actif à sa surface dans une solution d'un composé métallique électrophile, et laver ledit substrat avec un solvant non aqueux, ce qui permet de former un film monomoléculaire dudit composé métallique électrophile à la surface dudit substrat, et
b) tremper et maintenir ledit substrat ayant ledit film monomoléculaire dudit composé métallique électrophile sur lui dans au moins un composé organique choisi parmi les composés organiques ayant au moins un atome d'hydrogène actif et des anhydrides d'acides desdits composés organiques ou dans une solution dudit composé organique ayant un atome d'hydrogène actif ou une solution dudit anhydride d'acide dudit composé organique, ce qui permet de former un film organique monomoléculaire sur ladite surface du film monomoléculaire dudit composé métallique électrophile.

2. Procédé de préparation d'un film organique selon la revendication 1, où on exécute au moins deux fois les étapes a) et b).

3. Procédé de préparation d'un film organique selon la revendication 1 ou 2, où on choisit le composé organique parmi les acides carboxyliques, les acides phosphoriques organiques et les acides sulfoniques.

4. Procédé de préparation d'un film organique selon la revendication 1 à 3, où la solution de composé métallique électrophile est une solution non aqueuse.

5. Procédé de préparation d'un film organique selon la revendication 1 à 4, où le substrat ayant des atomes d'hydrogène actif comprend au moins un groupe choisi parmi les groupes -OH, les groupes >NH, les groupes -NH₂, les groupes -COOH et les groupes -SH à sa surface.

6. Procédé de préparation d'un film organique selon la revendication 1 à 5, où le composé de métal électrophile est choisi parmi les halogénures, les hydroxydes, les composés alkyles et les composés alcoxy.

7. Procédé de préparation d'un film organique selon la revendication 6, où le métal dudit composé métallique électrophile est au moins un métal choisi parmi germanium (Ge), étain (Sn), titane (Ti), zirconium (Zr), hafnium (Hf) et Samarium (Sm).
